# EUROPEAN PATENT SPECIFICATION

(11) **EP 3 671 993 B1**
(45) Date of publication and mention of the grant of the patent: **25.05.2022**
(21) Application number: 18214294.3
(22) Date of filing: 20.12.2018
(51) Int. Cl.: H02B 13/025, H02G 5/00

(54) **ELECTRICAL ARC ABSORBER SYSTEM, A SWITCHGEAR HAVING AN ELECTRICAL ARC ABSORBER SYSTEM AND METHOD FOR OPERATING A SWITCHGEAR**
ELEKTRISCHES LICHTBOGENABSORBERSYSTEM, SCHALTANLAGE MIT EINEM ELEKTRISCHEN LICHTBOGENABSORBERSYSTEM UND VERFAHREN ZUM BETREIBEN EINER SCHALTANLAGE
SYSTÈME ABSORBEUR D'ARC ÉLECTRIQUE, APPAREILLAGE DE COMMUTATION DOTÉ D'UN SYSTÈME ABSORBEUR D'ARC ÉLECTRIQUE ET PROCÉDÉ DE FONCTIONNEMENT D'UN APPAREIL DE COMMUTATION

(43) Date of publication of application: 24.06.2020
(73) Proprietor: ABB Schweiz AG, 5400 Baden (CH)
(72) Inventor: SINGH, Shailendra, 3916 Porsgrunn (NO); SUBBIAH THEVAR, Dukkaiappan, 40489 Düsseldorf (DE); SKRYTEN, Pal, 3718 Skien (NO); KRISTOFFERSEN, Martin, 3929 Porsgrunn (NO); LINDQVIST, Björn, 3743 Skien (NO); PETTERSEN, Terje, 3734 Skien (NO)
(74) Representative: Kransell & Wennborg KB

(56) References cited:
- EP-A1- 0 903 826
- DE-A1- 4 142 518
- DE-A1-102007 045 486
- DE-A1-102011 085 099
- JP-A- 2016 042 777
- US-A1- 2011 149 482
- US-B2- 9 515 464

## Description

### Technical Field

The invention relates to the field of electrical arc absorption, such as an electrical arc absorber. In particular, the invention relates to an electrical arc absorber for a switchgear. The invention further relates to a method for absorbing an electrical arc, in particular an electrical arc appearing in a switchgear.

### Background Art

In switchgears, especially switchgears in high or medium voltage applications, the appearance of an electrical arc is an undesired event, for which the switchgear structure has to be prepared for keeping the damages induced by the electrical arc at a minimum. However, electrical arcs in high voltage switchgears are powerful; for instance, for safety reasons, the structure of the switchgears of high voltage applications has to withstand the current of typically 20000A-40000A for one second.

For reducing the damage resulting from an electrical arc in switchgears, arc absorbers are provided in some known switchgears. The arc absorber cools the heat released by the internal arc. In particular, a pressure rise and gas flow is the outcome, once an electrical arc appears. The gas absorbs the energy of the electrical arc. Thereby, the temperature of the gas rises. The gas flow is then guided to an arc absorber, which cools the exhaust gas. The arc absorber may be provided in the form of a heat exchanger or the like.

However, the known arc absorbers can cool the exhaust gas, but do not help in avoiding a burn through or reduced energy generation due to the electrical arc. This causes extensive damages to the switchgear structure, and results in a time and cost intensive repair or replacement of parts of the switchgear.

DE 41 42 518 A1 discloses a switchgear with an earthed electrode arranged around the ends of conductors inside the housing of the switchgear to reduce the length of an arc occurring between the conductors and the housing. JP 2016 042777 A discloses a similar arrangement. Other relevant prior art is dislcosed in EP 0 903 826 A1, US 9 515 464 B2, DE 10 2007 045486 A1, DE 10 2011 085099 A1 and US 2011/149482 A1.

In view of the above, an electrical arc absorber system for a switchgear; a switchgear having an electrical arc absorber system and a method for operating a switchgear are provided that overcome at least some of the problems in the art.

### Brief Summary of the Invention

In view of the above, an arc absorber system for a switchgear according to claim 1 and 8, and a method for operating a switchgear according to claim 10 are provided. Further aspects, advantages, and features of the present invention are apparent from the dependent claims, the description, and the accompanying drawings.

According to an aspect of the invention, an electrical arc absorber system for a switchgear, controlling a current, is provided. The arc absorber system includes a impedance reduction system for reducing the impedance of an electrical arc appearing in the switchgear between the current phases and/or the ground, wherein the impedance reduction system reduces the impedance for the electrical arc compared to the impedance of the electrical arc in the medium present in the switchgear. Further, the impedance reduction system includes at least one arc catcher for the current phases of the current.

The electrical arc absorber system according to embodiments described herein allows for reducing the impedance for an electrical arc appearing in a switchgear by providing an electrical arc catcher. In particular, the power of the electrical arc is reduced by reducing the impedance for the electrical arc. The electrical arc catcher being especially made of an electrically conductive material provides a fixed burning zone for the electrical arc. Thus, by reducing the impedance of the electrical arc, the damages of the switchgear and the surrounding structure induced by electrical arcs are also reduced. In turn, the reduced damages spare repair time and cost and make a switchgear having an electrical arc absorber system according to embodiments described herein more reliable and more attractive than known systems.

According to embodiments described herein, it is possible to predict the burning zone of the arc with the arc catcher as described herein. With the arc burning location being fixed, the arc burning location can be reinforced with arc resistant material for burn through. Moreover, with the electrical arc absorber system according to embodiments described herein, the arc voltage is reduced as there is only one location for the arc to go at. This reduces the damage caused by an internal arc in a switchgear. Typically, the arc energy was reduced by about 25%-50% in the tests done with the electrical arc absorber system according to embodiments described herein. The arc absorber system includes at least one arc catcher for the current phases of the current, wherein the arc catcher is formed to surround the respective current phase at least partially and to run at least partially along the length of the current phase in the switchgear. Further, the arc catcher is made of an electrically conductive material for reducing the impedance of the electrical arc appearing between the current phases or between the current phases and ground compared to the impedance of the electrical arc in the medium present in the switchgear. The arc absorber system further includes an arc cooler for cooling a gas provided for absorbing energy of the electrical arc (or byproducts of the electrical arc) in the switchgear, the arc cooler being connected to the arc catcher.

As mentioned above, the arc catcher allows for predicting the burning zone of the arc and reduces the power of the electrical arc in the switchgear. In the electrical arc absorber system according to embodiments described herein having the arc cooler, the lower voltage arc and the resulting hot gases are passed through the arc cooler, especially metal grid plates. In particular, the arc cooler according to embodiments described herein cools the exhaust gases transporting the released (remaining) energy of the electrical arc. In some embodiments, the arc cooler and the arc catcher may be provided as part of one common structure (called "hybrid arc absorber"). This additionally reduces the damage caused by an internal arc in the switchgear (compared to the arc catcher of embodiments described herein alone). The lower voltage arc and the resulting hot gases passing through the arc cooler (e.g. metal grid plates which are part of one common structure), provide a very efficient way to reduce damages of an electrical arc in a switchgear or another structure of electrical engineering or the surroundings. Also, by providing the arc catcher and the arc cooler in one electrical arc absorber system, the combined effect of the arc cooler and the arc catcher can be achieved at a minimum space. Therefore, the electrical arc absorber system according to embodiments described herein is suitable for switchgears or other electrical equipment with little available space.

According to a further aspect of the invention, a switchgear including an electrical arc absorber system according to embodiments described herein is provided.

According to a further aspect of the invention, a method for operating switchgear controlling a current having current phases is provided. The method includes providing an arc absorber system according to claim 1. The method further includes catching an electrical arc appearing between current phases or between a current phase and ground with the arc catcher, and absorbing the remaining energy of the electrical arc or byproducts of the electrical arc by the arc cooler.

As explained in detail above, the electrical arc absorber system, the switchgear including an electrical arc absorber system and the method for operating a switchgear according to embodiments described herein allow for reducing the damages induced by an electrical arc and thereby save costs for maintenance and repair. The electrical arc absorber system as described herein may be used in any field of electrical engineering

### Brief Description of the Drawings

The subject matter of the invention will be explained in more detail in the following text with reference to preferred exemplary embodiments which are illustrated in the drawings, in which:
Figures 1a and 1b are schematic drawings of front views of electrical arc absorber systems according to embodiments described herein;
Figure 2 is a schematic drawing of a side view of an electrical arc absorber system according to embodiments described herein, figure 1a being not according to the invention.
Figures 3a to 3c show schematic drawings of different arc catchers according to embodiments described herein;
Figure 4 shows a schematic drawing of a front view of a further electrical arc absorber system according to embodiments described; and
Figure 5 shows a flow chart of a method for operating a switchgear according to embodiments described herein.

The reference symbols used in the drawings, and their meanings, are listed in summary form in the list of reference symbols. In principle, identical parts are provided with the same reference symbols in the figures.

### Preferred Embodiments of the Invention

The electrical arc absorber system according to embodiments is described as being used in a switchgear. However, the electrical arc absorber system according to embodiments can also be used in other structures in the field of electrical engineering or in any suitable electro-technical device.

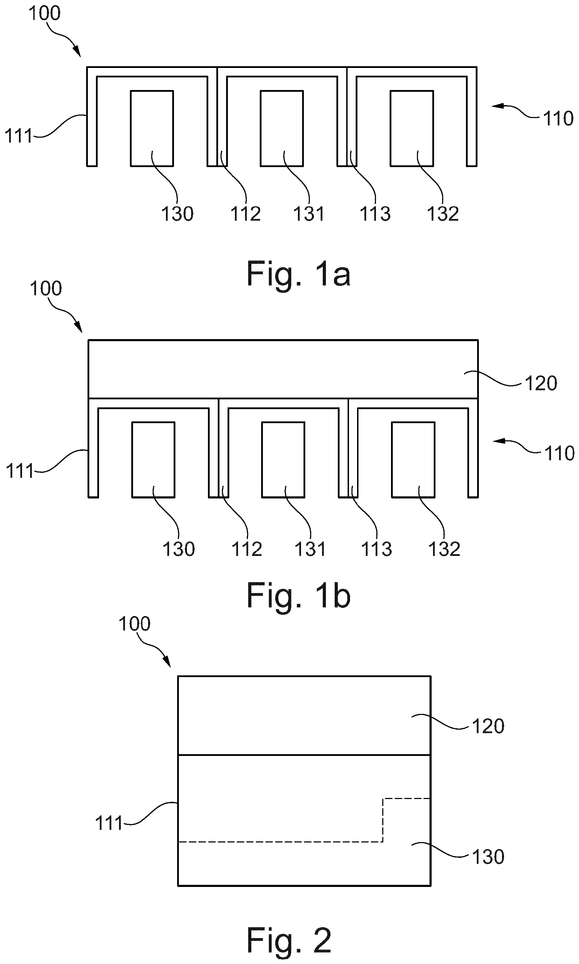

Figure 1a shows an example of an electrical arc absorber system 100 according to embodiments described herein. Typically, the arc absorber system 100 includes an impedance reduction system 110. According to some embodiments, and as the skilled person will understand, the impedance as used herein may include the resistance as the definition of the term "impedance" takes care of DC systems by 'frequency' parameter '0'. The impedance reduction system 110 of Figure 1a includes three arc catchers 111, 112, and 113.

According to embodiments described herein, the impedance reduction system reduces the impedance for the electrical arc compared to the impedance of the electrical arc in the medium present in the switchgear (without an arc catcher according to embodiments described herein). For instance, if the switchgear is filled with air, the medium present in the switchgear is air and the impedance of the electrical arc would be reduced compared to the impedance of the electrical arc in air by the impedance reduction system according to embodiments described herein. In another example, the switchgear may be filled with an isolating gas and the medium present in the switchgear would be the isolating gas; accordingly, the impedance of the electrical arc would be reduced compared to the impedance of the electrical arc in the isolating gas by the impedance reduction system according to embodiments described herein.

In the example of Fig. 1a, an arc catcher is provided for each current phase 130, 131, 132. Accordingly, three arc catchers 111, 112, and 113 can be seen in Figure 1a. However, the electrical arc absorber system according to embodiments described herein may include at least one arc catcher for the current phases of the current in the switchgear. For example, only one or two current phases may be provide with an arc catcher according to embodiments described herein. According to some embodiments, the arc absorber system as described herein may include an arc catcher for at least one of the current phases, arc catchers for more than for only one current phase or one arc catcher for each of the current phases.

Figure 1b shows an electrical arc absorber system according to the invention and to embodiments described herein. The electrical arc absorber system shown in Figure 1b is similar to the arc absorber system of Figure 1a, but the electrical arc absorber system as shown in Figure 1b additionally includes an arc cooler 120. According to the invention shown in Figure 1b, the arc cooler 120 is provided in a common structure with the arc catcher 110, as will be explained in detail below. In some embodiments, the arc cooler may include a grid structure or a grid-like structure, especially a metal grid structure. The grid structure of the arc cooler may help to cool an exhaust gas.

Figure 2 shows a side view of an electrical arc absorber system as exemplarily shown in Figure 1b. The arc catchers according to embodiments described herein shown in Figure 2 may run along the length of the current phases in the switchgear. In the example shown in Figure 2, one arc catcher 111 can be seen running along the length of the current phase 130. Alternatively, the arc catcher can also be adapted for partial coverage of the length of the phase.

According to some embodiments, the switchgear, in which the arc absorber system may be used, includes a bus bar for each current phase. Accordingly, the arc absorber system, and especially the electrical arc catcher, may be adapted for at least partially surrounding a bus bar (especially in a circumferential direction, not longitudinal direction). Typically, the arc catcher being adapted for at least partially surrounding the bus bar may also be designed and shaped to run along the length of the bus bars of the current phase, or at least along a part of the length of the bus bar. For instance, the arc catcher according to some embodiments described herein may extend over typically at least 30%, more typically at least 50% and even more typically at least 70% of the length of the bus bar it is provided for.

According to some embodiments described herein, the arc catcher has a length adapted to the (partial) length of the current phase or bus bar so that the arc catcher as described herein can catch an arc initiated at any location along the current phase or bus bar.

According to the invention, the arc catcher surrounds at least partially the respective current phase. For instance, in Figures 1a and 1b, the arc catcher 111 partially surrounds the current phase 130, the arc catcher 112 partially surrounds the current phase 131, and the arc catcher 113 partially surrounds the current phase 132. In the example shown in Figures 1a and 1b, the arc catchers surround the current phases at three sides. In other words, an arc catcher according to some embodiments described herein partially encapsulates the current phase. According to some embodiments, the term "surrounding at least partially" may be understood in that there is a kind of opening in the arc catcher (at one side). In the some embodiments, the arc catcher may be built to completely surround the current phase.

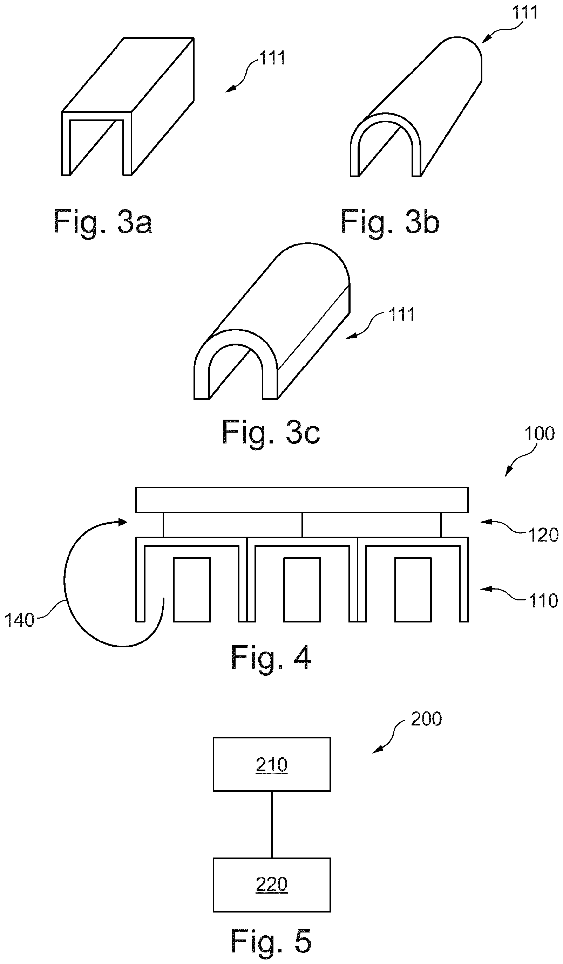

Figures 3a, 3b, and 3c show examples of arc catchers according to embodiments described herein. According to some embodiments described herein, the arc catcher prevents the electrical arc appearing in an electro-technical device from expanding, or restricts the electrical arc in expanding. In Figure 3a, the cross-section of the arc catcher in width direction (being substantially perpendicular to the length direction of the arc catcher running along the current phase) is formed in a hollow, substantially rectangular shape. The hollow, substantially rectangular shape is also shown in the examples of arc catchers shown in Figures 1a and 1b. The shape of Figure 3a can be made in various production ways and is easy to produce and, thus, cost efficient.

In Figure 3b, a hollow, substantially round or substantially semi-circular shape is shown for the cross-section of the arc catcher in width direction. According to some embodiments, the cross-section of the arc catcher in width direction of Figure 3b has the shape of a semicircle. The hollow, semicircle-like shape of an arc catcher of Figure 3b may be used for low material stresses. Also, the semicircle-like shape of an arc catcher may be used for a smooth guidance of the electrical arc, in particular along the circumference of the electrical arc catcher. For instance, with the semicircle-like shape of an arc catcher, the distance of the current phase to the arc catcher partially surrounding the current phase is substantially the same at every point of the arc catcher. Such geometry may be useful for a reliable and predictable behavior of the electrical arc.

Figure 3c shows an electrical arc catcher 111 having an oval-like shape. In particular, the lower part of the electrical arc catcher 111 of Figure 3c is a straight part (like the lower part of the electrical arc catcher shown in Figure 3a). The upper part of the electrical arc catcher 111 of Figure 3c has a substantially round shape, for instance like the semi-circle like shape of the electrical arc catcher shown in Figure 3b. According to some embodiments, the shape composed of a straight part and a semi-circle like shape this shape may be produced in a cost-efficient way and may, at the same time, offer a desired and beneficial guidance of the electrical arc along the circumference of the electrical arc catcher. For instance, the shape shown in Figure 3c may provide a round shape at a relevant zone of an arc impact. According to some embodiments described herein, the embodiments shown in Figures 3a, 3b, and 3c may all be denoted as having a U-like shape.

The term "substantially" as used herein may mean that there may be a certain deviation from the characteristic denoted with "substantially." For instance, the term "substantially round" or "substantially circular" refers to a shape which may have certain deviations from the exact circular shape, such as a deviation of about 1% to about 10% of the general extension in one direction. According to a further example, the term "substantially perpendicular" may refer to an arrangement of two elements or axes with respect to each other deviating from the exact perpendicular arrangement to a defined extent. For instance, the term "substantially perpendicular" may refer to an arrangement deviating from the exact perpendicular arrangement by up to about 10°. According to a yet further example, the term "substantially rectangular" refers to a geometry, which may include deviations from the mathematically correct rectangles. For instance, the angle in a "substantially rectangular" shape may deviate up to typically about 15°, more typically more than about 10° from the exact rectangle.

According to the invention, the arc catcher is made of an electrically conductive material, or at least includes an electrically conductive material. For instance, the arc catcher may be made of a metal, such as steel, or may contain a metal, such as steel. In a further example, the arc catcher may be made of a ceramic material, may contain a ceramic material, or may include a reinforcement of a ceramic material, such as a Titanium oxide, or a Titanium Maganese oxide, like for instance LSTM (Lanthanum Strontium Titanium Maganese Oxide).

According to some embodiments described herein, the arc catcher is able to reduce the impedance of an electrical arc appearing in an electro-technical device, such as switchgear. For instance, switchgears may be used in applications with an electrical potential of up to 1 MV. In case of a short circuit, most electro-technical devices in this range are designed so as to withstand the short circuit for 1 second. Typically, the electro-technical devices should withstand a current of 20000-40000 A for Is for safety reasons. Thus, an electrical arc appearing in a switchgear is able to burn for 1 second. According to embodiments described herein, the power of the electrical arc is reduced by reducing the impedance of the electrical arc. In particular, a reduction of the power of the electrical arc is achieved by the arc catcher as described in embodiments herein.

In particular, the shape and the material of the arc catcher according to embodiments described herein restrict the arc to expand in the electro-technical device and reduce the power of the electrical arc. The described arc absorber system according to embodiments described herein may be used for predicting the burning zone of the arc. The arc burning location can therefore be fixed (within a defined range), which means that the location can be reinforced with arc resistant material against burn through of the arc. For instance, a ceramic material as described above may be used for reinforcement against an arc burn through. With the fixed location and the reinforced arc resistant material, the damages induced by an electrical arc can be reduced compared to known designs. Also, as described above, the arc voltage is reduced as there is only one location for the arc to go at.

The arc catcher according to embodiments described herein can also be described as being a sacrificial electrode within the electro-technical device. The arc catcher being considered as a sacrificial electrode may be understood in that the electrical arc is attracted, directed, or drawn to the arc catcher, instead of being attracted by a structure of the electro-technical device (or the surroundings) and damaging the structure of the electro-technical device (or the surroundings). Also, according to some embodiments, the arc catcher may be damaged instead of a structure of the electro-technical device being more relevant for the function of the electro-technical device or more expensive.

According to the invention, the arc absorber system includes an arc cooler, as mentioned with respect to Figure 1b above. In known systems, for cooling of an internal arc, heat release is usually done by so called arc-absorbers. Arc-absorbers or arc cooler can cool the exhaust gases but cannot help in avoiding the burn through of the electrical arc. Some embodiments described herein include an arc cooler in combination with a (especially integrated) arc catcher so as to predict the burning zone of the arc.

According to some embodiments, the combination of an arc catcher and an arc cooler in one compact design allows to meet the lower roof IAC requirement at low cost (IAC = internal arc certification). For instance, there are projects with a requirement for an internal arc in the bus bar compartment and immediate release of gases upwards into the room (having no duct). In some projects, there is only few 100s of mm separation between the switchgear top and a roof. For instance, a switchgear according to embodiments described herein may be designed for a separation between the switchgear top and a roof (of a enclosure, or housing, in which the switchgear is used) of typically between about 100 mm and about 1000 mm, more typically between 200 mm and about 800 mm, and even more typically between about 300 mm and about 600 mm. Due to this small distance and lack of bus bar compartment, it is very difficult to solve the question of arc absorbing.

Embodiments described herein combining the arc cooler and the arc catcher in one design, or one integrated structure, offer a cost and space efficient solution for reducing the damages induced by an electrical arc and for releasing the exhaust gases. In some examples of switchgears having an electrical arc absorber system according to embodiments described herein, the RMU's were not significantly strengthened to meet the above discussed goals (RMU = ring main unit). This also spares production and material costs.

According to the invention, the arc cooler and the arc catcher are provided in one common or one integrated structure. According to the invention, the term "common structure" or "integrated structure" may be understood as a structure providing both the arc cooler and the arc catcher; in particular, the "common structure" or "integrated structure" may be understood in that the arc cooler and the arc catcher are connected to each other, especially in a space-saving way. For instance, the arc cooler and the arc catcher may be connected to each other by standing in contact with each other; in another example, the arc catcher and the arc cooler may be fastened to each other, e.g. by screws, by welding, by soldering or the like. In some embodiments, the arc cooler and the arc catcher may be made from one material and/or from one structure.

According to some embodiments, which may be combined with other embodiments described herein, the arc catcher hinders the direct passing of hot gases into the arc cooler and forces it to take longer path, further cooling down the exhaust gases.

Figure 4 shows an embodiment of an arc absorber system 100 including an arc catcher 110 and an arc cooler 120. In particular, the arc catcher 110 of Figure 4 may be an arc catcher as described in detail above. According to the invention, the arc cooler is adapted for cooling a gas, which is provided for absorbing energy of the electrical arc or byproducts of the electrical arc in the electro-technical device, such as a switchgear. According to some embodiments, byproducts of an electrical arc may include high temperature gases, such as components or gases formed under the influence of the electrical arc. For instance, a lot of chemical reactions take place, when an electrical arc appears (causing temperatures of 1000°s of Kelvin); the results of the chemical reactions may be denoted as byproducts of the electrical arc. In some embodiments, the arc cooler 120 may include a grid structure on top and a channel. In Figure 4, the gas flow can be seen by arrow 140. The arrow 140 indicating the flow of a cooling gas starts between the current phase and the arc catcher. Typically, the flow starts at a location, where the electrical arc appears. The cooling gas absorbs the released (remaining and reduced) energy of the electrical arc. Further, the gas is guided to the channel of the arc cooler 120. In particular, the channel may be a steel channel, typically an angled steel channel for forcing the hot gas in a desired direction. In some embodiments, the gas channel of the arc cooler is formed for forcing the hot gas in a direction down. This may be especially helpful in the case that there is not much space for the arc absorber system according to embodiments described herein.

According to some embodiments, the channel of the arc cooler further forces the gas through a grid structure. In particular, the grid-like structure of the arc cooler further cools the cooling gas. According to some embodiments, the grid-like structure of the arc cooler may include grid plates, such as metallic grid plates, foams, such as metal foams, porous media, such as stones and the like. The material of the grid-like structure of the arc cooler may be chosen according to the heat conductivity so that the heat from the cooling gas is in particular absorbed by the grid-like structure.

In some embodiments, the electro-technical device including the arc absorber system according to embodiments described herein may include a cooling gas source providing a cooling gas in the case of the appearance of an electrical arc within the electro-technical device. In other embodiments, the cooling gas may be a gas present in the electro-technical device, such as an isolating gas or the like.

According to some embodiments described herein, the arc cooler is a heat sink in the arc absorber system, in particular by absorbing heat energy of the electrical arc via the cooling gas. In Figure 4, the arc cooler is provided in an integrated structure with the arc absorber.

According to some embodiments, an arc cooler may have more than one grid-like structure, or may be composed of more than one grid- like structure segment. For instance, the arc cooler may include one grid-like structure segment for one current phase, or for one bus bar, or for one arc catcher of the electro-technical device having the arc absorber system according to embodiments described herein. In some embodiments, the arc cooler of the arc absorber system may have three grid-like structure segments, such as three separate grid-like structures segments. According to some embodiments, especially in the case that the arc cooler and the arc catcher are provided in a common structure, three segments of the common structure may be provided separately for ease of assembly. For instance, one segment includes a common structure of one arc catcher and one arc cooler segment, such as one grid-like structure segment of the arc cooler. In some examples, one segment (including an arc cooler segment having one grid-like structure and one arc catcher) may be provided. In some embodiments, the segments may be mounted together to form a common structure of the arc catcher(s) and the arc cooler consisting of arc cooler segments. According to some embodiments described herein, a 'segment' contributes to the modular nature of the structure. For instance, it is possible to have multiple 'catcher and cooler' along the length of a busbar. In such a scenario, the 'catcher and cooler' can cover all the three phases.

According to some embodiments, a switchgear is described including an arc absorber system as described in embodiments herein. In particular, the details described above with respect to the arc catcher and the arc cooler described in embodiments above may be applicable to the switchgear having the arc absorber system according to embodiments described herein.

In some embodiments, which may be combined with other embodiments described herein, the switchgear having the arc absorber arrangement according to embodiments described herein has two contacts for performing the switching function. In particular, the switchgear having an arc absorber arrangement according to embodiments described herein may have two contacts of electrically conductive material additionally to the arc catcher, which may also be made of an electrically conductive material according to some embodiments. In other words, the arc catcher reducing the impedance of an electrical arc is provided additionally to known elements of a switchgear, such as switching contacts. Moreover, the arc catcher according to embodiments described herein may be adapted for being provided additionally to the switching contacts of a switchgear.

In some embodiments, the arc absorber system may be used and/or provided in a switchgear, which is designed to have an upward/downward release of exhaust gases. Additionally or alternatively, the arc absorber system according to embodiments described herein may be used and/or provided in a switchgear having no duct or duct system for the release of exhaust gases. Accordingly, a switchgear is provided, which includes the arc absorber system according to embodiments described herein and which is designed to have an upward release exhaust gas and/or which is designed without a duct for the release of exhaust gases. As explained above, space requirements may force a user to dispose a switchgear arrangement with upward release of exhaust gases and/or without a duct, e.g. in the case that little space is available for the switchgear, such as below a roof or the like.

According to some embodiments, the term "upward release of exhaust gases" may be understood in that the exhaust gases are released in a direction away from the bus bars or current phases, in particular in a direction being angled to the longitudinal direction of the bus bar or current phase. In some embodiments, the exhaust gas may be released in a direction being substantially rectangular to the longitudinal direction of the bus bar and/or the current phase. In the example of Figure 4, an upward release of exhaust gas may substantially be in a direction from the bottom to the top of the drawing page seen in a plane of the drawing page.

In some embodiments, the switchgear including the arc absorber arrangement according to embodiments described herein may typically have a rated voltage of between about 1kV and about 245 kV, more typically between about 1 kV and about 145 kV, even more typically between about 1 kV and about 100 kV, even more typically between about 1 kV and about 72 kV, and even more typically between about 1 kV and about 52 kV. In some embodiments, the switchgear, in which an arc absorber system according to embodiments described herein may be used, may have a voltage range between about 1 kV and about 52kV. In some embodiments described herein, the arc absorber system and the switchgear as described herein may be designed for medium voltage applications. According to some embodiments, the medium voltage may range up to 72 kV (and may in particular typically be in a range between about 1 kV and about 72 kV). In some embodiments described herein, the arc absorber system and the switchgear as described herein may be designed for high voltage applications. For instance, the high voltage may begin from 72 kV. In some embodiments, the high voltage may include a voltage of 72kV or more.

According to embodiments described herein, a method for operating a switchgear including an arc absorber system as described in embodiments herein is provided. Figure 5 shows a flow chart of a method 200 according to embodiment described herein. Typically, the switchgear is a switchgear for controlling a current having current phases. The method 200 includes in box 210 providing an arc absorber system according to embodiments described herein. In particular, the arc absorber system provided in block 210 of the method 200 includes at least one arc catcher. In some embodiments, the arc catcher provided in method 200 may be an arc catcher as described and explained in detail above. For instance, the arc catcher used in the method 200 according to embodiments is made of, or contains an electrically conductive material, such as steel or the like. Additionally, the arc catcher for the method 200 surrounds the current phase, for which it is provided, at least partially, in particular at least partially in circumferential direction of the bus bar of the respective current phase.

The method 200 further includes in block 220 catching an electrical arc appearing between current phases or between a current phase and ground with the arc catcher. According to some embodiments, catching the electrical arc may be done by reducing the impedance of the electrical arc by the arc catcher, e.g. by the material, the geometry, and/or the location of the arc catcher. As explained in detail above, the arc catcher reduces the impedance of the electrical arc compared to the impedance of the electrical arc in the medium present in the switchgear without the arc catcher. The electrical arc will therefore by caught by the arc catcher at a fixed location, or a fixed location area.

According to some embodiments, the method further includes absorbing the remaining energy released by the electrical arc by an arc cooler. The arc cooler used in the method described herein is an arc cooler as described in detail in embodiments above. In particular, the arc cooler may include a channel guiding the cooling gas and a grid, especially a metal grid. In some embodiments, the arc cooler may be provided in segments, as explained in detail above. For instance, the arc cooler may have one segment for each current phase. In some embodiments, each segment of the arc cooler may be composed of a channel structure and a grid structure. The segments of the arc cooler may be assembled to form the arc cooler.

According to the invention, the arc cooler and the arc catcher used in the method according to embodiments described herein is provided in an integrated or common structure. According to the invention, the method 200 thus further includes providing the arc catcher and the arc cooler in a common structure, wherein the arc catcher and the arc cooler are in particular connected to each other in the common structure (as described in detail above). In particular, the arc cooler and the arc catcher being provided in an integrated or common structure may mean that they stand in contact with each other, or are even connected to each other. In some embodiments, which may be combined with other embodiments described herein, the arc cooler segments as described may be provided in an integrated or common structure with an arc catcher according to embodiments described herein. For instance, one arc catcher for one current phase may be used in an integrated structure with a segment of the arc cooler.

In some embodiments, the common or integrated structure may especially be useful in the case that there is little space for the electro-technical device having the arc absorber system according to embodiments described herein, such as a switchgear.

It may be understood that the arc cooler absorbing the remaining (released) energy of the electrical arc may at least partially absorb the energy of the electrical arc, which remains after the electrical arc was caught by the arc catcher. Therefore, the remaining energy of the electrical arc absorbed by the arc cooler may be understood as the energy released by the electrical arc after having hit the arc catcher. The remaining or released energy of the electrical arc may also be described as being a reduced energy, since the energy of the electrical arc is reduced by the arc catcher compared to a situation without the arc catcher. According to some embodiments described herein, the arc absorber system, the switchgear having an arc absorber system and the method for operating a switchgear according to embodiments described herein show several beneficial effects. For instance, the arc energy was reduced by 25% to 50% in tests, when using an arc absorber system according to embodiments described herein compared to a situation without the arc absorber system. Furthermore, the test showed a good reproducibility. In particular, the IAC tests were repeated several times with the arc absorber system according to embodiments described herein and passed.

Further, it may be noted that in known designs, adding too many metal-grids for absorbing the energy of an electrical arc by an arc cooler increases the internal pressure. Thus, the structure of the electro-technical device often used reinforcement, which increases the material and mounting costs for the electro-technical device. The arc absorber system as described in embodiments herein does not increase the internal pressure in the electro-technical device, or only increases the pressure in an insignificant way. In particular, the compact design and the common structure may contribute to the fact that the internal pressure is not increased with the arc absorber system according to embodiments described herein. In some embodiments, the structure of the arc catcher occupying little space and being designed to be integrated in the electro-technical device and especially (partially) around the bus bars, helps avoiding an increase of the internal pressure in the electro-technical device. The effect is beneficial since it reduces costs due to fewer reinforcements used in the structure of the electro-technical device and due to less damages of the electro-technical device.

Also, it may be noted that a test with known systems without the arc absorber system according to embodiments described herein failed for IAC (internal arc certification) at the same location.

It should be noted that the above described embodiments may be combined with each other in any way as long as they do not contradict each other. The description provides only examples of combinations of embodiments without limiting embodiments of the invention to the combinations shown in the detailed description.

Though the present invention has been described on the basis of some preferred embodiments, those skilled in the art should appreciate that those embodiments should by no way limit the scope of the present invention, which is defined by the accompanied claims.

## Claims

1. Electrical arc absorber system (100) for a switchgear configured to control a current, comprising:
an impedance reduction system (110) configured to reduce the impedance of an electrical arc appearing in the switchgear between the current phases (130; 131; 132) or a current phase and the ground, and
an arc cooler (120) configured to cool a gas provided for absorbing energy of the electrical arc or byproducts of the electrical arc in the switchgear,
the impedance reduction system (110) further comprising at least one arc catcher (111; 112; 113) for the current phases of the current, where the arc catcher comprises an electrically conductive material and is configured to surround the respective phase at least partially,
wherein the impedance reduction system is configured to reduce the impedance for the electrical arc compared to the impedance of the electrical arc in the medium present in the switchgear without the arc catcher, and
wherein the arc catcher (111; 112; 113) and the arc cooler (120) are connected to each other and are provided in a common structure.

2. The arc absorber system according to any of the preceding claims, wherein the arc absorber system (100) is an arc absorber system for a switchgear comprising a bus bar for each current phase (130; 131; 132), wherein the arc catcher (111; 112; 113) is adapted to run along the length of the bus bars of the current phases (130; 131, 132).

3. The arc absorber system according to any of the preceding claims, wherein the arc catcher (111; 112; 113) comprises an arc catcher structure, which is able to at least partially surround the respective current phase, wherein the arc catcher comprises in particular a U-like structure shape.

4. The arc absorber system according to any of the preceding claims, wherein the arc catcher (111; 112; 113) is made of an electrically conductive material.

5. The arc absorber system according to any of the preceding claims, wherein the arc cooler (120) is a heat sink in the arc absorber system (100).

6. The arc absorber system according to any of the preceding claims, wherein the arc cooler (120) comprises a grid structure, in particular a metal grid structure.

7. The arc absorber system according to any of the preceding claims, wherein the arc absorber system (100) is an arc absorber system for a switch gear in a voltage range between about 1 kV and about 145 kV.

8. A switchgear comprising an arc absorber system according to any of the preceding claims.

9. The switchgear according to claim 8, wherein the arc catcher of the arc absorber system is provided in the switchgear in addition to switching contacts of the switchgear.

10. Method of operating a switchgear configured to control a current having current phases, comprising:
Providing an arc absorber system according to any of claims 1 - 7,
Catching an electrical arc appearing between current phases or between a current phase and ground with the arc catcher, and
Absorbing the remaining energy of the electrical arc or byproducts of the electrical arc by the arc cooler (120).

## Patentansprüche

1. Absorptionssystem (100) für einen elektrischen Lichtbogen für eine Schaltanlage, die konfiguriert ist, einen Strom zu steuern, das Folgendes umfasst:
ein Impedanzverringerungssystem (110), das konfiguriert ist, die Impedanz eines elektrischen Lichtbogens zu verringern, der in der Schaltanlage zwischen den Stromphasen (130; 131; 132) oder einer Stromphase und Masse auftritt, und
eine Lichtbogenkühleinrichtung (120), die konfiguriert ist, ein Gas zu kühlen, das zum Absorbieren der Energie des elektrischen Lichtbogens oder von Nebenerscheinungen des elektrischen Lichtbogens in der Schaltanlage vorgesehen ist,
wobei das Impedanzverringerungssystem (110) ferner mindestens einen Lichtbogenfänger (111; 112; 113) für die Stromphasen des Stroms umfasst, wobei der Lichtbogenfänger ein elektrisch leitfähiges Material umfasst und konfiguriert ist, die jeweilige Phase zumindest teilweise zu umgeben,
wobei das Impedanzverringerungssystem konfiguriert ist, die Impedanz für den elektrischen Lichtbogen im Vergleich zu der Impedanz des elektrischen Lichtbogens in dem Medium, das in der Schaltanlage vorhanden ist, ohne den Lichtbogenfänger zu verringern, und
wobei der Lichtbogenfänger (111; 112; 113) und die Lichtbogenkühleinrichtung (120) miteinander verbunden sind und in einer gemeinsamen Struktur vorgesehen sind.

2. Lichtbogenabsorptionssystem nach einem der vorhergehenden Ansprüche, wobei das Lichtbogenabsorptionssystem (100) ein Lichtbogenabsorptionssystem für eine Schaltanlage ist, die eine Busschiene für jede Stromphase (130; 131; 132) umfasst, wobei der Lichtbogenfänger (111; 112; 113) ausgelegt ist, entlang der Länge der Busschienen der Stromphasen (130; 131; 132) zu verlaufen.

3. Lichtbogenabsorptionssystem nach einem der vorhergehenden Ansprüche, wobei der Lichtbogenfänger (111; 112; 113) eine Lichtbogenfängerstruktur umfasst, die die jeweilige Stromphase zumindest teilweise umgeben kann, wobei der Lichtbogenfänger insbesondere die Form einer U-artigen Struktur aufweist.

4. Lichtbogenabsorptionssystem nach einem der vorhergehenden Ansprüche, wobei der Lichtbogenfänger (111; 112; 113) aus einem elektrisch leitfähigen Material hergestellt ist.

5. Lichtbogenabsorptionssystem nach einem der vorhergehenden Ansprüche, wobei die Lichtbogenkühleinrichtung (120) eine Wärmesenke im Lichtbogenabsorptionssystem (100) ist.

6. Lichtbogenabsorptionssystem nach einem der vorhergehenden Ansprüche, wobei die Lichtbogenkühleinrichtung (120) eine Gitterstruktur, insbesondere eine Metallgitterstruktur, umfasst.

7. Lichtbogenabsorptionssystem nach einem der vorhergehenden Ansprüche, wobei das Lichtbogenabsorptionssystem (100) ein Lichtbogenabsorptionssystem für eine Schaltanlage in einem Spannungsbereich von etwa 1 kV bis etwa 145 kV ist.

8. Schaltanlage, die ein Lichtbogenabsorptionssystem nach einem der vorhergehenden Ansprüche umfasst.

9. Schaltanlage nach Anspruch 8, wobei der Lichtbogenfänger des Lichtbogenabsorptionssystems zusätzlich zu den Schaltkontakten der Schaltanlage in der Schaltanlage vorgesehen ist.

10. Verfahren zum Betreiben einer Schaltanlage, die konfiguriert ist, einen Strom, der Stromphasen aufweist, zu steuern, das Folgendes umfasst:
Bereitstellen eines Lichtbogenabsorptionssystems nach einem der Ansprüche 1-7,
Einfangen eines elektrischen Lichtbogens, der zwischen Stromphasen oder zwischen einer Stromphase und Masse auftritt, mit dem Lichtbogenfänger, und
Absorbieren der restlichen Energie des elektrischen Lichtbogens oder von Nebenerscheinungen des elektrischen Lichtbogens durch die Lichtbogenkühleinrichtung (120).

## Revendications

1. Système d'absorption d'arc électrique (100) pour un appareillage de commutation configuré pour contrôler un courant, le système comprenant :
un système de réduction d'impédance (110) configuré pour réduire l'impédance d'un arc électrique apparaissant dans l'appareillage de commutation entre les phases de courant (130 ; 131 ; 132) ou une phase de courant et la terre, et
un refroidisseur d'arc (120) configuré pour refroidir un gaz prévu pour absorber l'énergie de l'arc électrique ou des sous-produits de l'arc électrique dans l'appareillage de commutation,
le système de réduction d'impédance (110) comprenant en outre au moins un capteur d'arc (111 ; 112 ; 113) pour les phases de courant du courant, où le capteur d'arc comprend un matériau électriquement conducteur et est configuré pour entourer au moins partiellement la phase respective,
où le système de réduction d'impédance est configuré pour réduire l'impédance de l'arc électrique par rapport à l'impédance de l'arc électrique dans le milieu présent dans l'appareillage de commutation sans le capteur d'arc, et
où le capteur d'arc (111 ; 112 ; 113) et le refroidisseur d'arc (120) sont connectés l'un à l'autre et sont fournis dans une structure commune.

2. Système d'absorption d'arc selon l'une quelconque des revendications précédentes, dans lequel le système d'absorption d'arc (100) est un système d'absorption d'arc pour un appareillage de commutation comprenant une barre omnibus pour chaque phase de courant (130 ; 131 ; 132), où le capteur d'arc (111 ; 112 ; 113) est adapté pour se déplacer le long de la longueur des barres omnibus des phases de courant (130 ; 131 ; 132).

3. Système d'absorption d'arc selon l'une quelconque des revendications précédentes, dans lequel le capteur d'arc (111 ; 112 ; 113) comprend une structure de capteur d'arc, qui est capable d'entourer au moins partiellement la phase de courant respective, où le capteur d'arc comprend en particulier une forme de structure en U.

4. Système d'absorption d'arc selon l'une quelconque des revendications précédentes, dans lequel le capteur d'arc (111 ; 112 ; 113) est constitué d'un matériau électriquement conducteur.

5. Système d'absorption d'arc selon l'une quelconque des revendications précédentes, dans lequel le refroidisseur d'arc (120) est un dissipateur thermique dans le système d'absorption d'arc (100).

6. Système d'absorption d'arc selon l'une quelconque des revendications précédentes, dans lequel le refroidisseur d'arc (120) comprend une structure de grille, notamment une structure de grille métallique.

7. Système d'absorption d'arc selon l'une quelconque des revendications précédentes, dans lequel le système d'absorption d'arc (100) est un système d'absorption d'arc pour un appareillage de commutation dans une plage de tension comprise entre environ 1 kV et environ 145 kV.

8. Appareillage de commutation comprenant un système absorbeur d'arc selon l'une quelconque des revendications précédentes.

9. Appareillage de commutation selon la revendication 8, dans lequel le capteur d'arc du système d'absorption d'arc est pourvu dans l'appareillage de commutation en plus des contacts de commutation de l'appareillage de commutation.

10. Procédé de fonctionnement d'un appareillage de commutation configuré pour commander un courant ayant des phases de courant, le procédé comprenant les étapes suivantes :
fournir un système absorbeur d'arc selon l'une quelconque des revendications 1 à 7,
capturer, avec le capteur d'arc, un arc électrique apparaissant entre des phases de courant ou entre une phase de courant et la terre, et
absorber l'énergie restante de l'arc électrique ou des sous-produits de l'arc électrique par le refroidisseur d'arc (120).
